# EUROPEAN PATENT APPLICATION

(11) **EP 1 047 248 A1**
(43) Date of publication of application: **25.10.2000**
(21) Application number: 00303429.5
(22) Date of filing: 25.04.2000
(51) Int. Cl.: H04M 1/60, H04B 1/38

(54) **Handsfree device for cellular phone system**

(30) Priority: 21.04.1999 US 295673
(71) Applicant: Wirefree, Kfar Sava 44108 (IL)
(72) Inventor: Shoval, Zeev, Tel Aviv 63506 (IL); Tamir, Baruch, Netanya 42304 (IL)
(74) Representative: Molyneaux, Martyn William

(57) **Abstract**

Radio frequency apparatus for attachment to a cellular telephone unit, the apparatus comprising a receiving unit for receiving a signal from the cellular telephone unit at a cellular telephone frequency and a converting unit for converting said signal to a signal suitable for reception by a standard FM band radio receiver, wherein said apparatus further comprises a broadcasting unit for broadcasting said signal suitable for reception by a standard FM band radio receiver. The apparatus way be internal or external to the cellular telephone frequency, and may comprise a universal cellular interface, enabling it to be connected to different types of cellphone.

## Description

### Field Of The Invention

The present invention relates to cellular telephone systems and more particularly but not exclusively to mobile phones for vehicles, which mobile phones utilize speakers of the vehicle audio system.

### Background Of The Invention

US Patent Application No. 09/059488 describes a hands-free telephone apparatus for use in a vehicle having a vehicular antenna for receiving radio frequency signals, a vehicular receiver connected to the antenna and a vehicular speaker system for broadcasting sounds corresponding to the received signals to the interior of the vehicle, said hands-free telephone apparatus comprising,
a) a cellular cordless telephone handset for receiving a telephone signal from a caller;
b) a battery pack mounted on the handset for supplying electrical power to the handset;
c) a detachable housing supported by the handset and having a manually releasable latch;
d) an on-board microphone supported by the detachable housing for converting sounds uttered by a vehicular operator to an acoustic signal;
e) an on-board radio frequency transmitter supported by the detachable housing for transmitting the received signal to the vehicular antenna for broadcast by the vehicular speaker system to the vehicular operator; and
f) electrical contacts on the detachable housing for supplying electrical power to the transmitter.

Different cellphone systems use different transmission standards and therefore the device has to be manufactured individually for each different cellphone system.

### Summary of the Invention

According to a first aspect of the present invention there is provided radio frequency apparatus for mounting within a cellular telephone unit, the apparatus comprising
a receiving unit for receiving a signal from the cellular telephone unit at a cellular telephone frequency and
a converting unit for converting the signal to a signal suitable for reception by a standard FM band radio receiver, and
wherein the apparatus further comprises a broadcasting unit for broadcasting the signal suitable for reception by a standard FM band radio receiver.

In an embodiment the converter unit comprises a plurality of individual converters, each one suitable for converting a different one of a plurality of cellphone formats into the signal suitable for reception by a standard FM band radio receiver, and wherein the apparatus further comprises a switch for setting one of the plurality of individual converters as an operational converter.

Another embodiment is operable to convert a signal modulated using any one of a plurality of cellular telephone modulation systems, into the signal suitable for reception by a standard FM band radio receiver.

The apparatus is preferably connectable to a hands-free cellular vehicle phone and, in a further embodiment, is tunable to any standard FM band frequency.

Preferably, the apparatus is operable to transmit efficiently over a short distance such as five meters. The cellular telephone modulation systems may include any one of cdma, tdma, gsm, nmps, and anmps.

According to a second aspect of the present invention there is provided circuitry, for placing in a mobile telephone, the circuitry comprising a converter unit for converting signals from a first format in which signals are received at the mobile phone, to a second fonnat suitable for transmission to a radio receiver, wherein the converter unit comprises a plurality of individual converters, each individual converter being suitable for converting one of a plurality of cellphone formats into the second format, and wherein the circuitry further comprises a switch for setting one of the plurality of individual converters as an operational converter

Preferably, the second format is suitable for transmission to an FM band radio receiver.

In an embodiment, each individual converter unit is suitable for converting a different one of the plurality of cellphone formats into the second format.

Preferably, the circuitry is connectable to a hands-free cellular vehicle phone, and is tunable to any standard FM band frequency.

The circuitry is preferably operable to transmit efficiently over a short distance, typically five meters.

The cellular telephone modulation systems may include cdma, tdma, gsm, nmps, and anmps.

The circuitry is preferably directly controllable from dialing keys of the mobile phone and may be powered by the internal power supply of the mobile phone. Nevertheless it need not, when in operation, prevent use of a mobile phone internal microphone.

According to a third aspect of the present invention there is provided circuitry, for connecting to a mobile telephone, the circuitry comprising a converter unit for converting signals from a first format in which signals are received at the mobile phone, to a second format suitable for transmission to a radio receiver, wherein the converter unit comprises a plurality of individual converters, each one suitable for converting a different one of a plurality of cellphone formats into the second format, and wherein the circuitry further comprises a switch for setting one of the plurality of individual converters as an operational converter.

Preferably, the second format is suitable for transmission to an FM band radio receiver.

In an embodiment, the circuitry is connectable to a hands-free cellular vehicle phone, and may be tunable to any standard FM band frequency.

The circuitry is preferably operable to transmit efficiently over a short distance, typically five meters.

The cellular telephone modulation systems may include cdma, tdma, gsm, nmps, and anmps.

According to a fourth aspect of the present invention there is provided radio frequency apparatus for attachment to a telephone unit, the apparatus comprising a receiving unit for receiving a signal from the telephone unit in a telephone format and a converting unit for converting the signal to a signal suitable for reception by a standard FM band radio receiver, wherein the apparatus further comprises a broadcasting unit for broadcasting the signal suitable for reception by a standard FM band radio receiver, which apparatus is attached internally of the telephone unit.

In one preferred embodiment, the telephone is a wire-connected telephone.

According to a fifth aspect of the present invention there is provided radio frequency apparatus for attachment to a cellular telephone unit, the apparatus comprising
a receiving unit for receiving a signal from the cellular telephone unit at a cellular telephone frequency and a converting unit for converting the signal to a signal suitable for reception by a standard FM band radio receiver,
wherein the apparatus further comprises a broadcasting unit for broadcasting the signal suitable for reception by a standard FM band radio receiver,
wherein the converter unit comprises a plurality of individual converters, each one suitable for converting a different one of a plurality of cellphone formats into the second format, and
wherein the apparatus further comprises a switch for setting one of the plurality of individual converters as an operational converter.

In an embodiment, the apparatus is operable to convert a signal modulated using any one of a plurality of cellular telephone modulation systems, into the signal suitable for reception by a standard FM band radio receiver.

In a further embodiment the apparatus further comprises a socket for connection to a cellular phone and may be connectable to a hands-free cellular vehicle phone.

Preferably, the apparatus is tunable to any standard FM band frequency, and is operable to transmit efficiently over a short distance typically five meters.

The cellular telephone modulation systems may include cdma, tdma, gsm, nmps, and anmps.

### Brief Description Of The Drawings

For a better understanding of the invention and to show how the same may be carried into effect, reference will now be made, purely by way of example, to the accompanying drawings in which
Fig. 1 is a simplified diagram of a system according to a first embodiment of the present invention, showing a cellular phone unit connected to a radio transmitter for transmission to a car radio unit,
Fig. 2 is a simplified block diagram of part of the system of Fig. 1,
Fig. 3 is a simplified block diagram of a second embodiment of the present invention wherein transmission is also provided to an earpiece,
Fig. 4 is a simplified drawing of a third embodiment of the present invention, in which the radio transmitter is internal to the cellular phone unit, and
Fig. 5 is a simplified block diagram of IC components for use with any of the above embodiments in conjunction with any audio system.

### Description Of The Preferred Embodiments

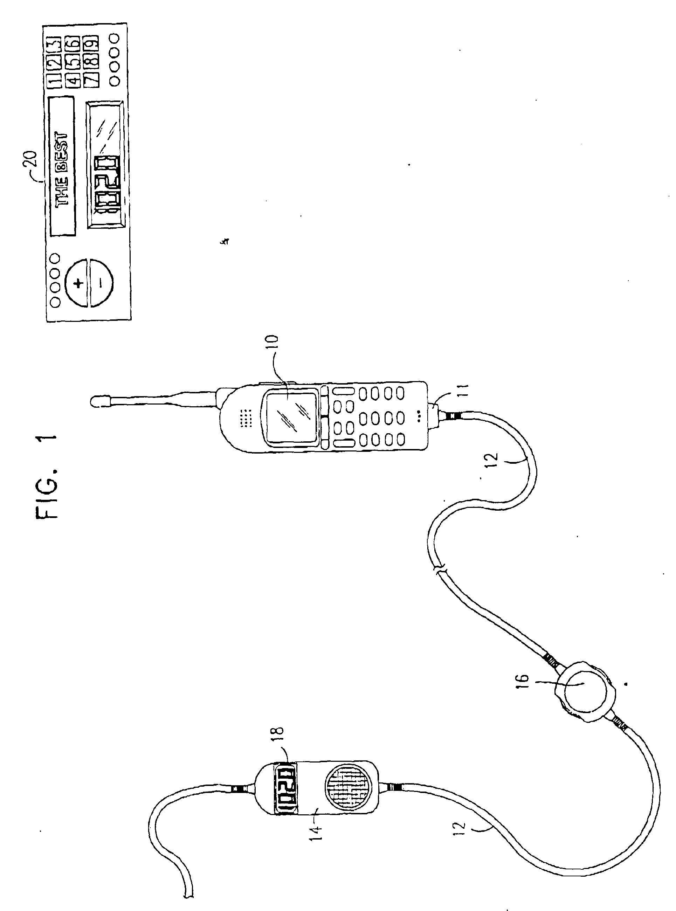

Referring now to Figure 1, there is shown a system according to a first embodiment of the present invention. The system of Fig. 1 comprises a cellular phone unit 10, having a connector 11 and a link 12 to a short range radio transmitter device 14. A microphone 16 intervenes between the cellular phone unit 10 and the radio transmitter unit 14. The radio transmitter unit has a readout display 18 on which is displayed the frequency to which it is tuned. A car radio unit 20 is present in the car but is not connected to the radio transmitter unit.

The car radio unit 20 may receive a signal from the short range transmitter when it is tuned to the same frequency.

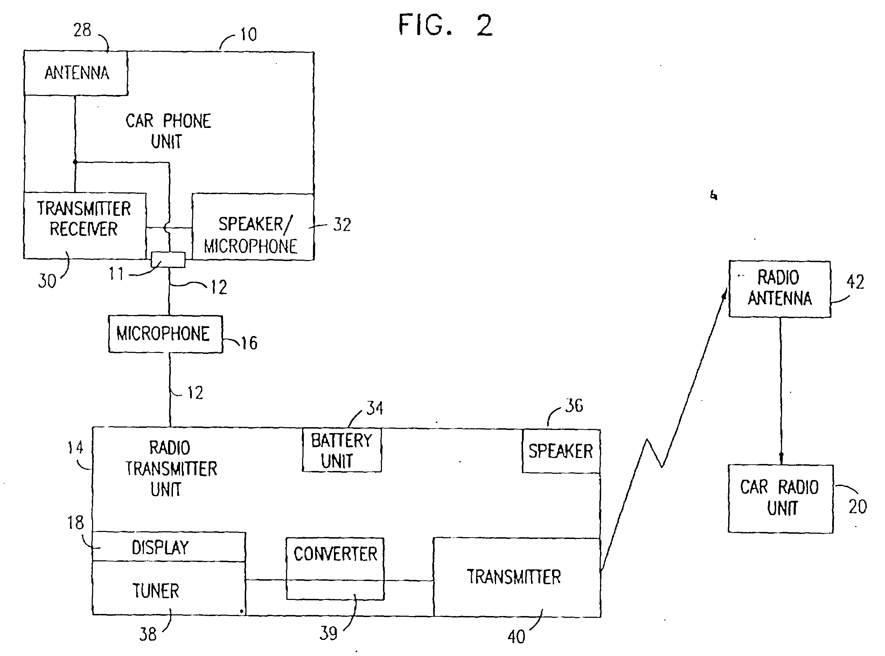

Referring now to Fig. 2, which is a block diagram of the system of Fig. 1, the cellular phone unit comprises an antenna 28, a transmitter/ receiver unit 30 which includes electronics for noise reduction, modulation and the like and a telephone internal speaker / microphone unit 32. The transmitter/receiver unit is operable to send a demodulated voiceband signal to the speaker / microphone unit 32.

Link 12 is connected to the cellular phone unit and intercepts the undemodulated signal from the antenna via the connector 11. The intercepted signal is sent to the radio transmitter unit 14 The radio transmitter unit 14 contains a battery unit 34 which can be recharged by connecting to a cigarette lighter socket or the like (not shown).

The radio transmitter unit preferably contains a speaker 36, which can be used to output sound from the phone unit 10 when it is not desired to interrupt a radio broadcast. This speaker will generally not produce sound of the quality that could be expected from the car audio system.

A tuner 38 is preset by the user to a spare radio frequency and the same frequency is preferably programmed into the car radio unit 20 as a predefined channel.

A converter unit 39 preferably converts the signal received from link 12 from a digital signal at mobile telephone frequencies to an analog signal at the preselected radio frequency. The skilled man will be aware that transmission formats vary and it may be that the radio requires a digital signal and the cellphone uses an analog signal. The precise form of conversion depends on the kind of cellphone and the kind of radio being used. Preferably the converter unit contains the circuitry for converting a plurality of different types of cellphone signal and jumpers, dip switches or the like, are provided to switch between the circuitry. These can be set at the factory or at the retail outlet to preselect between the different conversions. Alternatively selection of the appropriate circuitry may be carried out using software. In one embodiment the software obtains an operator input to identify the type of cellphone and carries out switching accordingly. In a preferred embodiment, however, the software is able to identify the cellphone type automatically through electronic interrogation and no operator input is required. Transmitter 40 transmits the converted signal at the predetermined frequency to the car radio antenna 42 where it is picked up as a standard radio signal, and the sound is output via the speakers of the car audio system.

By means of appropriate software or hardware programming, operation of the radio transmitter preferably automatically overrides operation of the cellular phone internal demodulation circuitry.

The devices of the system are housed in casings preferably molded from high-impact ABS materials.

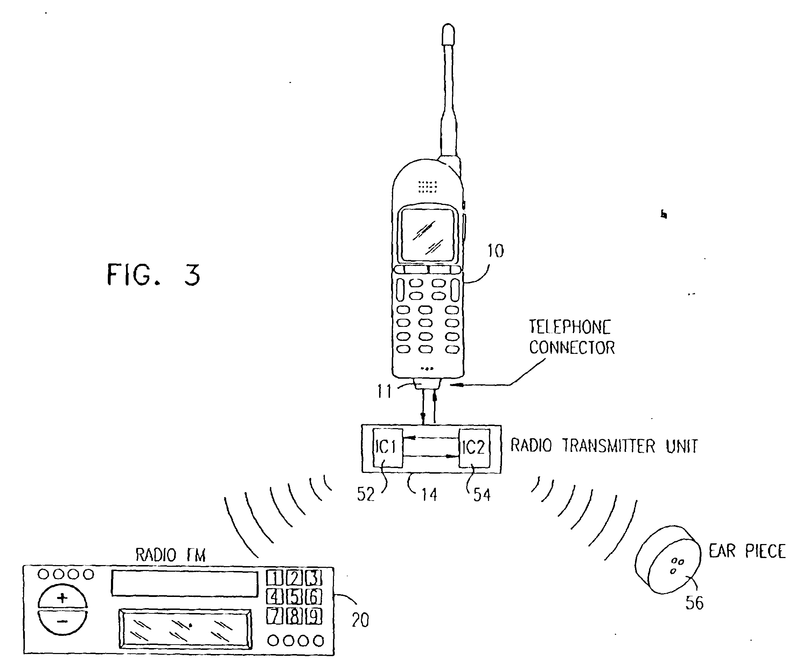

Reference is now made to Fig. 3 which shows a second embodiment of the present invention. Parts that are the same as in previous figures are given the same reference numerals and are not described again except where necessary for the understanding of the present embodiment.

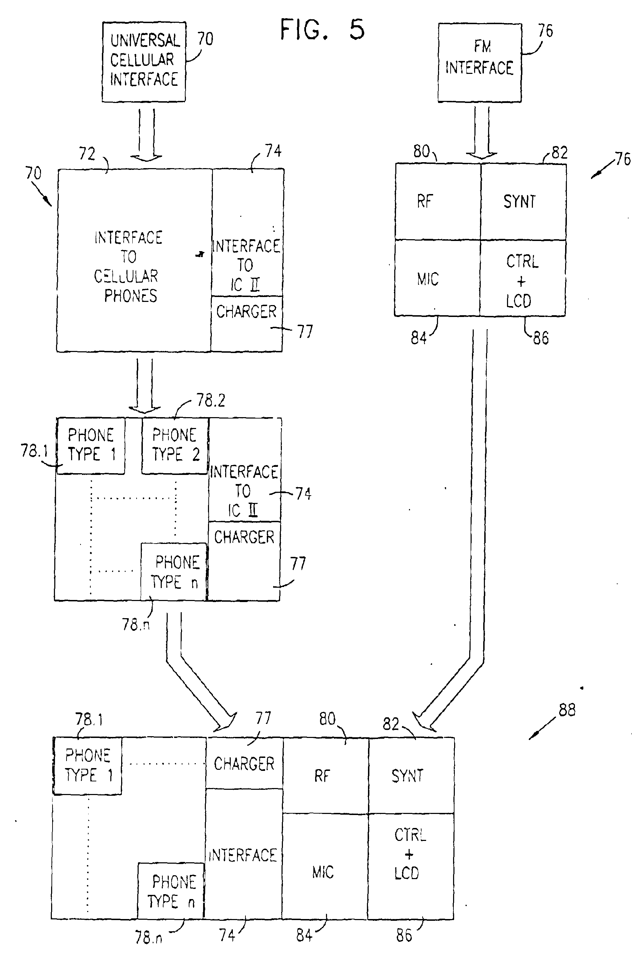

In Fig. 3, a cellphone 10 is connected via the telephone connector 11 to the radio transmitter unit 14. The radio transmitter unit 14 contains two integrated circuits 52 and 54 which between them perform the functions of the converter 39 and the transmitter 40 of Fig. 2. The two integrated circuits 52 and 54 are shown in detail in Fig. 5, below. Generally, the first integrated circuit 52 serves as an interface for the output of the cellphone 10. It preferably contains circuitry for interfacing to each one of a range of cellphones and can be set, via software, jumpers, dip switches and the like, to interface the type of cellphone actually being used, as described above.

The second integrated circuit 54 preferably serves as an RF transmitter, synthesizer, a microphone controller and a control circuit. It is operable to transmit to the car radio unit 20, as in the previous embodiment. In addition it is able to transmit to an earpiece 56, which is adapted to receive FM band radio signals. It will be noted that the embodiment of Fig. 1 is also able to transmit to a suitable earpiece.

As with the embodiment of Fig. 1, by means of appropriate software or hardware programming, operation of the radio transmitter preferably automatically overrides operation of the cellular phone internal demodulation circuitry.

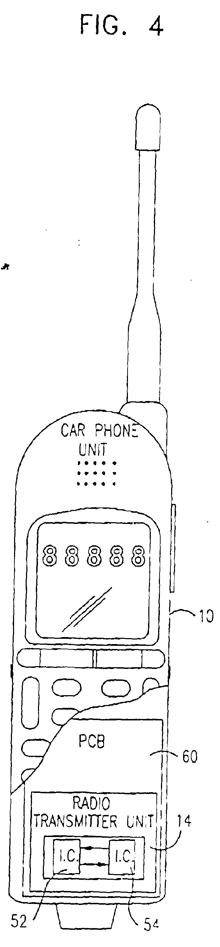

Reference is now made to Fig. 4, which shows a further embodiment of the present invention. Fig. 4 is a simplified drawing of the cellular phone unit 10 with the cover partly removed. A PCB 60 is shown with the radio transmitter unit 14 mounted directly thereon. The radio transmitter unit 14 is as described with respect to Fig. 3 except that it is mounted directly on the internal cellular phone PCB. Thus it is enabled to access the cellular phone internal antenna, not shown. As with the previous embodiments, transmission may be to the car radio unit 20 or to the earpiece 56. The radio transmitter unit is preferably operated by dialing a preset code into the cellphone either before or after dialing the number to be called, or when answering an incoming call. The dialing keys can be used directly to control the radio transmitter unit 14 since it is mounted directly on the PCB and has access to the cellular phone control signals.

By means of appropriate software or hardware programming, operation of the radio transmitter preferably automatically overrides operation of the cellular phone internal demodulation circuitry, as with the previous embodiments.

A preferred feature of the embodiment of Fig. 4 is that it is able to receive audio signals for output from the internal telephone microphone. Thus the separate external microphone 16, shown in Figs. 1 and 2, is not required.

Furthermore, the internally mounted radio transmitter unit 14 has much lower current requirements than external embodiments because it is able to take advantage of being on the internal board of the cellphone. Thus there is no need to provide a separate battery unit as the internal phone power supply is sufficient. The embodiment of Fig. 4 further allows for miniaturization.

A difficulty with mounting the radio transmitter unit within a car is that the internal space of a car 10 is a noisy RF environment, making it difficult to transmit an acceptable quality of signal to the FM receiver. This however can be overcome by careful specification of the components used, their accurate configuration and the addition of appropriate filtering, as would be apparent to a person skilled in the art.

Reference is now made to Fig. 5, which is a generalized diagram showing the layout of chips for use in any of the preceding embodiments. In the embodiment of Fig. 4 these chips may be mounted directly on the internal PCB of the cellular phone, either independently or as part of the radio transmitter unit 14, as shown. A universal cellular interface chip 70 preferably comprises a first interface region 72 for the cellular phones and a second interface region 74 for interfacing to an FM interface chip 76. A charger region 77, for recharging the power supply, may optionally be placed on the FM interface chip 76. For an external model, such a region would preferably be set to "on" and for an internally mounted model, which may use the phone power supply, such a region would preferably be set to "off'.

The first interface region 72 for the cellular phones comprises n regions, 78.1..78.n, which serve as interfaces for n types of cellular phone. It is noted that the chip regions, shown in Fig. 5 as contiguous regions, are shown as such only for simplicity. The skilled person will appreciate that, in many cases, the regions may not be contiguous. At any given time preferably only one of the regions 78,1..78.n are activated, depending on the type of phone being used. Activation of the regions 78.1..78.n may be carried out using software or may be carried out using dip-switches or setting jumpers or like methods known to the skilled person. In a particularly preferred embodiment, software is used which is able to identify the telephone being used and activate the appropriate region 78.1..78.n without manual intervention.

The FM interface chip 76 preferably comprises an RF region 80, a synthesizer region 82, a microphone region 84 and a control region 86. The RF region 80 carries out the steps necessary to convert the data stream into an FM modulated signal for transmission to a nearby FM receiver. The synthesizer region 82 synthesizes the carrier frequency for the RF region 80. The frequency is preferably set by software under user control. The software preferably sets the size of the channels and their separation.

The microphone region 84 preferably comprises echo cancellation and noise suppression circuitry. It may further comprise an amplifier for picking up noise from a distance, thus allowing hands free use.

A controller region 86 provides for various additional services that may be applicable to telephone use, for example it may implement a caller ID application or support a memo display, allowing notes to be taken. In a further embodiment it may incorporate voice recognition software, thus allowing the user to give voice commands to the phone or to dictate notes. The voice recognition software would typically require training with the voice of the user. The controller region 86 preferably contains space to implement a wide range of telephone connected applications and the skilled person will be able to add to the above list.

The controller region 86 preferably also controls the LCD display 18 of the embodiment of Fig. 1, or the cellular phone LCD in the embodiment of Fig. 4, to indicate the frequency currently being used.

In a preferred embodiment, cellular interface chip 70 and the FM interface chip 76 are implemented on a single chip such as a chip 88 in Fig. 5. In chip 88 all of the regions shown in the separate chips are placed together and are substantially identical except for the interface region 74 which may now be substantially truncated.

In the above description the terms "car", "car audio" and "cellular phone" have been used. The skilled person will appreciate that the invention applies to cellular phones in any kind of vehicle. The skilled person will further appreciate that the invention is applicable not only within vehicles but whenever a cellphone of the type hereindescribed is within range of a radio-based audio system. Furthermore the skilled person will realize that the invention need not be restricted to a mobile phone but may be applied to a wired telephone which is located in proximity to a radio audio system. This is achieved simply by adding circuitry for the appropriate reception interface to the integrated circuit 52. The invention may be used in combination with any audio system including earphone radio receivers.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited to what has been particularly shown and described hereinabove. Rather, the scope of the present invention is defined only by the claims that follow:

## Claims

1. Radio frequency apparatus for mounting within a cellular telephone unit, said apparatus comprising
a receiving unit for receiving a signal from said cellular telephone unit at a cellular telephone frequency and
a converting unit for converting said signal to a signal suitable for reception by a standard FM band radio receiver, and
wherein said apparatus further comprises a broadcasting unit for broadcasting said signal suitable for reception by a standard FM band radio receiver.

2. Apparatus according to claim 1, wherein said converter unit comprises a plurality of individual converters, each one suitable for converting a different one of a plurality of cellphone formats into said signal suitable for reception by a standard FM band radio receiver, and wherein said apparatus further comprises a switch for setting one of said plurality of individual converters as on operational converter.

3. Circuitry, for placing in a mobile telephone, said circuitry comprising a converter unit for converting signals from a first format in which signals are received at said mobile phone, to a second format suitable for transmission to a radio receiver, wherein said converter unit comprises a plurality of individual converters, each individual converter being suitable for converting one of a plurality of cellphone formats into said second format, and wherein said circuitry further comprises a switch for setting one of said plurality of individual converters as an operational converter

4. Circuitry according to claim 3, wherein said second format is suitable for transmission to an FM band radio receiver.

5. Circuitry according to claim 3, wherein each individual converter unit is suitable for converting a different one of said plurality of cellphone formats into said second format.

6. Circuitry according to claim 3, which is directly controllable from dialing keys of said mobile phone.

7. Circuitry according to claim 3, which is powered by said internal power supply of said mobile phone.

8. Circuitry according to claim 3, which, when in operation, does not prevent use of a mobile phone internal microphone.

9. Circuitry, for connecting to a mobile telephone, said circuitry comprising a converter unit for converting signals from a first format in which signals are received at said mobile phone, to a second format suitable for transmission to a radio receiver, wherein said converter unit comprises a plurality of individual converters, each one suitable for converting a different one of a plurality of cellphone formats into said second format, and wherein said circuitry further comprises a switch for setting one of said plurality of individual converters as an operational converter.

10. Circuitry according to claim 9, wherein said second format is suitable for transmission to an FM band radio receiver.

11. Radio frequency apparatus for attachment to a telephone unit, said apparatus comprising a receiving unit for receiving a signal from said telephone unit in a telephone format and a converting unit for converting said signal to a signal suitable for reception by a standard FM band radio receiver, wherein said apparatus further comprises a broadcasting unit for broadcasting said signal suitable for reception by a standard FM band radio receiver, which apparatus is attached internally of said telephone unit.

12. Radio frequency apparatus according to claim 11, wherein said telephone is a wire-connected telephone.

13. Radio frequency apparatus for attachment to a cellular telephone unit, said apparatus comprising
a receiving unit for receiving a signal from said cellular telephone unit at a cellular telephone frequency and a converting unit for converting said signal to a signal suitable for reception by a standard FM band radio receiver,
wherein said apparatus further comprises a broadcasting unit for broadcasting said signal suitable for reception by a standard FM band radio receiver,
wherein said converter unit comprises a plurality of individual converters, each one suitable for converting a different one of plurality of cellphone formats into said second format, and
wherein said apparatus further comprises a switch for setting one of said plurality of individual converters as an operational converter.

14. Apparatus according to any preceding claim, operable to convert a signal modulated using any one of a plurality of cellular telephone modulation systems, into said signal suitable for reception by a standard FM band radio receiver.

15. Apparatus according to any preceding claim, further comprising a socket for connection to a cellular phone.

16. Apparatus according to any preceding claim, which is connectable to a hands-free cellular vehicle phone.

17. Apparatus according to any preceding claim, which is tunable to any standard FM band frequency.

18. Apparatus according to any preceding claim, which is operable to transmit efficiently over a short distance.

19. Apparatus according to claim 18, wherein said short distance is substantially five meters.

20. Apparatus according to any preceding claim, wherein said cellular telephone modulation systems include cdma, tdma, gsm, nmps, and anmps.
